# EUROPÄISCHE PATENTSCHRIFT

(11) **EP 0 407 835 B1**
(45) Veröffentlichungstag und Bekanntmachung des Hinweises auf die Patenterteilung: **01.09.1993**
(21) Anmeldenummer: 90112433.9
(22) Anmeldetag: 29.06.1990
(51) Int. Cl.: G01L 5/00, G01L 1/14, G01B 7/02

(54) **Rasterkraftmikroskop**
Atomic force microscope
Microscope à force atomique

(30) Priorität: 10.07.1989 DE 3922589
(43) Veröffentlichungstag der Anmeldung: 16.01.1991
(73) Patentinhaber: FORSCHUNGSZENTRUM JÜLICH GMBH, 52425 Jülich (DE)
(72) Erfinder: Göddenhenrich, Thomas, D-5170 Jülich (DE); Hartmann, Uwe, Dr., D-5162 Niederzier (DE)

(56) Entgegenhaltungen:
- EP-A- 0 290 648
- JOURNAL OF VACUUM SCIENCE & TECHNOLOGY, Band 7, Nr. 4, July/August 1989, Seiten 2906-2913, New York, US; N.A. BURNHAM et al.: "Measuring the nanomechanical properties and surface forces of materials using an atomic force microscope"
- JOURNAL OF VACUUM SCIENCE & TECHNOLOGY, 2. Auflage, Band 6, Nr. 3, Teil III, Mai/Juni 1988, Seiten 2089-2092, New York, US; O. MARTI et al.: "Atomic force microscopy and scanning tunneling microscopy with a combination atomic force microscope/scanning tunneling microscope"
- PHYSICAL REVIEW LETTERS, Band 56, Nr. 9, 3 Mai 1986, Seiten 930-933, Canterbury Press, US; G. BINNING et al.: "Atomic Force Microscope"

## Beschreibung

Die Erfindung bezieht sich auf ein Rasterkraftmikroskop.

Rasterkraftmiskroskope sind bekannt. Sie weisen eine Abtastnadel auf, die auf Kräfte zwischen Nadelspitze und einer ihr mit Abstand gegenüberliegenden Objektoberfläche reagiert. Die Abtastnadel ist federnd aufgehängt und wird infolge der Krafteinwirkung bewegt. Es werden geringe Nadelbewegungen gemessen, siehe G. Binnig et al, "Atomic Force Microscope", Phys. Rev. Lett. , 1986, Bd. 56, S. 930 ff. Die Kräfte, die zwischen Nadelspitze und Objektoberfläche wirken und die Bewegung der Nadelspitze verursachen, können neben van-der-Waals'schen Kräften beispielsweise auch elektrostatische oder magnetostatische Kräfte sein, vgl. O. Marti et al, "Combination atomic force microscope/scanning tunneling microskope", J. Vac. Sci. Technol. A 6 (3), 1988, S. 2089/2092, sowie D. Rugar et al, "Force microscope using fiber-optic displacement sensor", Rev. Sci. Instrum. , 1988, Bd. 59(11), S. 2337/2340.

Aufwendig ist das Messen und Registrieren der feinen Bewegungen der federnd gelagerten Tastspitze. Bekannt ist es, die Bewegung mit einem Rastertunnelmikroskop zu ermitteln, siehe die vorgenannte Veröffentlichung von O. Marti et al, oder optische Sensoren mit interferierenden Laserstrahlen einzusetzen, vgl. die Veröffentlichung von D. Rugar et al. Bei optischen Meßverfahren kann die zwischen Tastspitze und Objektoberfläche wirkende Kraft nicht absolut, sondern nur der Kraftgradient, also eine Kraftänderung gemessen werden. In EP-A1-290648 werden die feinen Bewegungen mit einem Plattekondensation gemessen.

Aufgabe der Erfindung ist es, eine einfache Meßeinrichtung zur Registrierung der Relativbewegung zwischen Tastspitze und Objektoberfläche zu schaffen, mit der sich je nach technischer Anforderung sowohl die zwischen Tastspitze und Objektoberfläche wirkende Kraft absolut, aber auch die Kraftänderung messen läßt. Die Meßeinrichtung soll zugleich auch eine kompakte Bauweise aufweisen.

Diese Aufgabe der Erfindung wird durch die in Patentanspruch 1 angegebenen Merkmale gelöst.

Mit einer sphärischen Oberfläche können auch beide Elektroden versehen sein, Patentanspruch 2. Um für Schwingungsvorgänge hohe Resonanzfrequenzen zu erhalten, ist es zur Reduktion der Trägheitskräfte zweckmäßig, das Ende der Tastspitze oder deren federnde Aufhängung als Kondensatorelement zu verwenden, Patentanspruch 3. Diese weiteren Ausbildungen der Erfindung unterstützen den gewünschten einfachen Aufbau des Rasterkraftmikroskops und ersparen ein Justieren der Elektroden, das bei Verwendung von Kondensatorplatten wegen der erforderlichen Paralleleinstellung zueinander notwendig ist.

Die Erfindung wird nachfolgend anhand eines in der Zeichnung schematisch wiedergegebenen Ausführungsbeispieles näher erläutert. Die Figuren zeigen im einzelnen:
- Figur 1: mechanischer Aufbau des Rasterkraftmikroskops;
- Figur 2: Schaltbild der Meßanlagen, wobei die gezeigte Plattenkapazität nicht beansprucht ist.

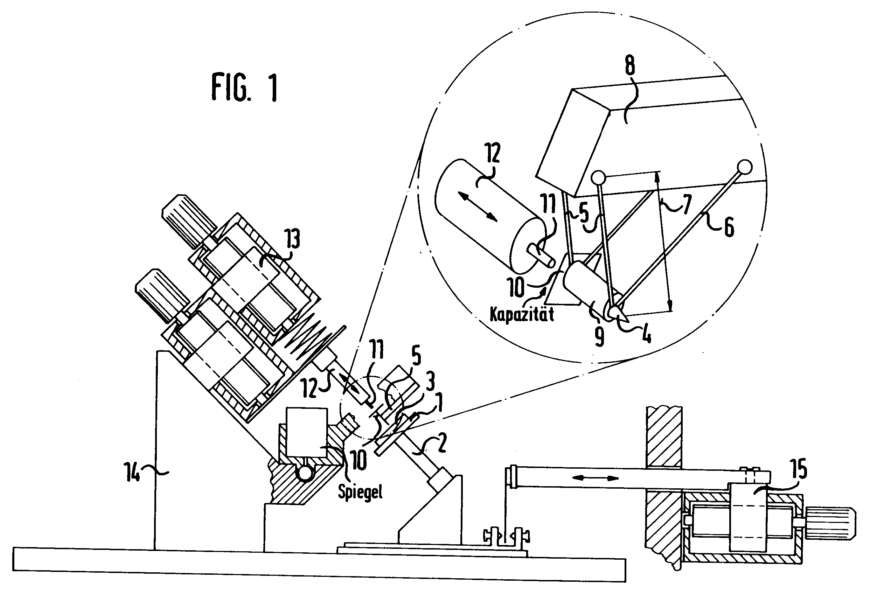

Figur 1 zeigt den mechanischen Aufbau eines Rasterkraftmikroskops mit kapazitiver Abstandsmessung. Auf einem Objektträger 1 ist auf einem XYZ-Piezoelement 2 ein Objekt 3 befestigt, dessen Oberflächenstruktur ermittelt werden soll. Das XYZ-Piezoelement ist geeignet, durch Anlegen entsprechender Spannungen das Objekt 3 sowohl senkrecht zur Objektoberfläche (Z-Richtung) als auch parallel zu seiner Oberfläche (X,Y-Richtung) zu bewegen.

Mit Abstand zur Objektoberfläche ist eine Tastspitze 4 angeordnet, die an einem Federelement 5 befestigt ist. Als Federelement wird eine Doppeldrahtfeder benutzt, wie sie beispielsweise in der vorgenannten Veröffentlichung von O. Marti et al angegeben ist. Im Ausführungsbeispiel besteht der das Federelement mit seinen Schenkeln 6 bildende Draht aus Aluminium mit einem Durchmesser von 25 µm. Die Länge 7 der Schenkel 6 zur Befestigung des Federelementes 5 an einem Träger 8 beträgt jeweils 5 mm. Das Federelement weist eine Federkonstante von etwa 1 N/m auf.

Die Tastspitze 4 ist über eine Halterung 9 starr mit einer Kondensatorelektrode 10 verbunden, die im Ausführungsbeispiel als Kondensatorplatte ausgebildet ist. Im Ausführungsbeispiel steht der Kondensatorelektrode 10 eine Referenzelektrode 11 gegenüber, die eine sphärisch geformte Oberfläche aufweist. Die sphärische Oberfläche ist zur Kondensatorelektrode 10 hin gerichtet.

Zur Feststellung des relativen Abstandes zwischen Kondensatorelektrode 10 und Referenzelektrode 11 wird im einfachsten Fall die gegebene Kapazität zwischen den Elektroden gemessen. Die Kondensatorelektrode 10 und die Referenzelektrode 11 sind daher gegeneinander elektrisch isoliert angeordnet.

Im Ausführungsbeispiel ist die Referenzelektrode 11 an einem Steuerpiezoelement 12 befestigt. Das Steuerpiezoelement dient zur Feineinstellung des Abstandes zwischen Referenzelektrode 11 und Kondensatorelektrode 10, insbesondere zum Nachführen der Referenzelektrode 11 während der Kraftmessung. Zur Grobeinstellung ist eine mechanische Verstelleinrichtung 13 vorgesehen, die eine Bewegung der Referenzelektrode über Mikrometerschrauben gestattet. Die Verstelleinrichtung 13 ist am Arbeitstisch 14 befestigt.

Über eine weitere Verstelleinrichtung 15 mit Mikrometerschraube läßt sich auch der Objektträger 1 bewegen. Ein Probenhalter ist am Arbeitstisch 14 verschiebbar angeordnet.

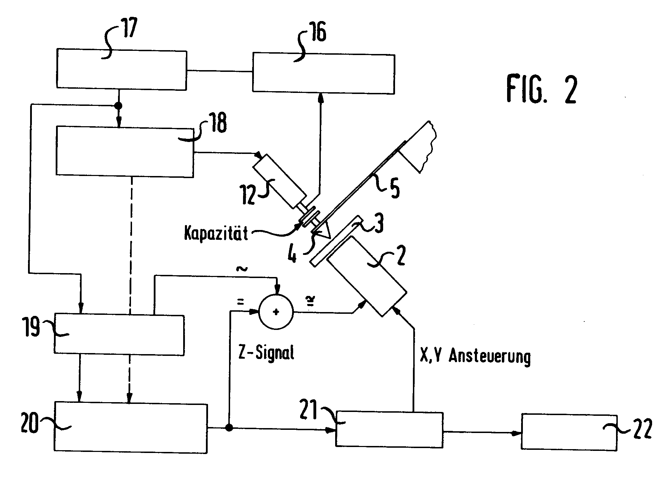

Zur Messung der Kapazität und Aufzeichnung der Meßergebnisse dient die in Figur 2 dargestellte Meßanlage. Die dem Abstand zwischen Kondensatorelektrode 10 und Referenzelektrode 11 entsprechende elektrische Kapazität, die wie bereits angegeben im einfachsten Fall als Referenzsignal für die Auslenkung der Tastspitze 4 infolge der wirkenden Kraft gemessen wird, wird mit einer Kapazitätsmeßbrücke 16 und einem lock-in-Detektor 17 als phasenempfindlichem Verstärker ermittelt. Kapazitätsmeßbrücke und lock-in-Detektor sind derart ausgelegt, daß sich auch sehr geringe Auslenkungen der Tastspitze im Subangström-Bereich und sich daraus ergebende Kapazitätsänderungen registrieren lassen. Im Ausführungsbeispiel weist die Kapazitätsmeßbrücke 16 ein Verhältnis 100 : 1 zwischen gemessener Kapazität zwischen der Kondensatorelektrode 10 und der Referenzelektrode 11 einerseits und einer Referenzkapazität in der Kapazitätsmeßbrücke 16 andererseits auf. Wird also eine Kapazität von 1 pF zwischen Kondensatorelektrode 10 und Referenzelektrode 11 gemessen, so ist die Referenzkapazität in der Kapazitätsmeßbrücke 16 auf 100 pF einzustellen. Im Ausführungsbeispiel ist die Referenzkapazität variierbar ausgebildet und läßt sich an verschiedene, dem jeweiligen Anwendungsfall entsprechende Kapazitätswerte anpassen. Mit dem lock-in-Detektor 17 wird unter Phasenabgleich bei einer Frequenz von ca. 50 kHz der in der Kapazitätsmeßbrücke fließende Strom aufgrund der unterschiedlichen Kapazitätswerte in der Meßbrücke ermittelt.

Die Empfindlichkeit der Kapazitätsmessung beträgt im Ausführungsbeispiel etwa 1 x 10⁻⁶ pF. Die Empfindlichkeit der Messung wird durch die Temperaturdrift der Referenzkapazität in der Kapazitätsmeßbrücke begrenzt. Die Meßeinrichtung ist derart ausgelegt, daß sich bei einem Abstand von 1 µm zwischen der Kondensatorelektrode 10, die als Kondensatorplatte mit einer Fläche 0,1 mm² ausgebildet ist, und der Referenzelektrode 11 eine Kapazität von 1 pF ergibt. Die vorgenannte Empfindlichkeit entspricht dann einer Abstandsänderung von nur 0,01 Å (1 pm) zwischen Kondensatorelektrode 10 und Referenzelektrode 11. Die Empfindlichkeit kann durch Verwendung einer Referenzkapazität mit geringer Temperaturdrift gesteigert werden.

Das Steuerpiezoelement 12 wird von einer feedback-Elektronik 18 bewegt. Die feedback-Elektronik 18 ist zusätzlich dazu geeignet, zwischen Kondensatorelektrode 10 und Referenzelektrode 11 die gegebene Kapazität konstant zu halten. In diesem Falle ist das bei einer Bewegung der Tastspitze 4 notwendige Nachführen der Referenzelektrode 11 durch Verkürzen oder Verlängern des Steuerpiezoelementes 12 ein Maß für die zwischen Tastspitze 4 und Objektoberfläche wirkende Kraft. Das zur Verstellung des Steuerpiezoelementes 12 notwendige elektrische Signal wird von einem weiteren lock-in-Verstärker 19 von der feedback-Elektronik 18 abgegriffen.

Der lock-in-Detektor 17 und die feedback-Elektronik 18 leiten ihre Signale zu einem elektronischen Regler 20, der zusammen mit einer Rechnereinheit 21 die Bewegung des XYZ-Piezoelementes 2 steuert und somit die Lage der Objektoberfläche relativ zur Tastspitze 4 einstellt. Zur Steuerung des XYZ-Piezoelementes 2 werden dem Piezoelement vom elektronischen Regler 20 zur Verlängerung und Verkürzung des XYZ-Piezoelementes 2 in Z-Richtung entsprechende Gleichspannungswerte aufgeschaltet, für die Bewegung des Piezoelementes in XY-Richtung werden im Ausführungsbeispiel entsprechende Gleichspannungswerte von der Rechnereinheit 21 erzeugt. Am Ausgang der Rechnereinheit 21 ist ein Signal abgreifbar, das der herrschenden Kraft zwischen Tastspitze 4 und Objektoberfläche proportional ist. Dieses Signal wird zur Bilderzeugung und Registrierung einem Datensichtgerät 22 aufgeschaltet.

Über den lock-in-Verstärker 19 ist das XYZ-Piezoelement 2 in Z-Richtung auch schwingend bewegbar. Die hierzu erzeugte Wechselspannung ist dem XYZ-Piezoelement 2 additiv zur statischen Bewegung des Piezoelementes 2 in Z-Richtung aufschaltbar. Das Objekt oszilliert somit senkrecht zur Objektoberfläche in Richtung auf die Tastspitze 4 zu.

Mit dem Rasterkraftmikroskop der beschriebenen Art sind die folgende Operationen möglich:
a) Als Maß für die wirksame Kraft zwischen Tastspitze und Objektoberfläche wird die Bewegung des Steuerpiezoelements 12 genutzt, die notwendig ist, um die Referenzelektrode 11 mit der Maßgabe nachzuführen, daß die Kapazität und damit der Abstand zwischen Referenzelektrode 11 und Kondensatorelektrode 10 konstant bleiben. Um dabei auch die Kraft zwischen Tastspitze 4 und Objektoberfläche konstant zu halten zu können (zur Darstellung von Oberflächenstrukturen durch Wiedergabe von Linien gleicher Kraft), wird über das XYZ-Piezoelement das Objekt in Z-Richtung bewegt.
b) Eine andere Art der Messung erfolgt bei in Z-Richtung oszillierendem Objekt, es wird dann die dabei erzeugte Kraftänderung in Z-Richtung gemessen. Hierzu wird der Objektträger über den lock-in-Verstärker 19 in Z-Richtung bevorzugt sinusförmig nahe der Resonanzfrequenz des ungedämpften Federelementes 5 bewegt. Die daraus resultierende Schwingung der Tastspitze 4 wird wieder vom lock-in-Verstärker 19 ermittelt. Dabei sorgen der lock-in-Detektor 17 und die feedback-Elektronik 18 für einen konstanten mittleren Abstand zwischen Tastspitze 4 und Objektoberfläche. Dies erfolgt in gleicher Weise, wie es vorhergehend unter a) beschrieben ist.
c) Möglich ist es selbstverständlich auch, mit dem look-in-Detektor 17 direkt die Kapazitätsänderung zwischen Referenzelektrode 11 und Kondensatorelektrode 10 zu messen, die sich bei einer Abstandsänderung zwischen diesen Elektroden entsprechend der Auslenkung der Tastspitze 4 infolge der auf sie einwirkenden Kraft ergibt.

Die unter a) und b) beschriebenen Meßmethoden ermöglichen es, durch Konstanthalten der Kapazität und des Abstandes zwischen Kondensatorelektrode 10 und Referenzelektrode 11 einen Kurzschluß durch unbeabsichtigte Berührung der Elektroden infolge ihrer Bewegung zu vermeiden. Bei der unter b) beschriebenen Methode zur Messung der Kraftänderung in Z-Richtung werden hochfrequente Schwingungen mit geringen Amplituden im Bereich von 1 Å (0.1 nm) erzeugt. Der konstant eingehaltene mittlere Abstand zwischen Tastspitze 4 und Objektoberfläche beträgt bevorzugt dabei etwa 10 nm.

Zusätzlich zu den oben angegebenen Maßnahmen kann die wirksame Kraft zwischen Tastspitze und Objektoberfläche auch durch eine zwischen Tastspitze und Objekt angelegte elektrische Spannung über die dabei erzeugte resultierende elektrostatische Kraft gezielt beeinflußt werden.

Zur Ausbildung der Kondensatorelektrode oder der Referenzelektrode aus einer Drahtspitze wird der zu verwendende Draht zuvor geätzt und elektrolytisch poliert.

## Patentansprüche

1. Rasterkraftmikroskop mit einer federnd gelagerten Tastspitze (4), die mit Abstand zu einer Objektoberfläche (3) gehalten ist und relativ zur Objektoberfläche bewegbar ist, und deren Bewegung infolge zwischen Tastspitze und Objektoberfläche wirkenden Kräften mit einer die Bewegung elektrisch kapazitiv erfassenden Meßeinrichtung registrierbar ist, wobei die Tastspitze (4) mit einer Kondensatorelektrode (10) fest verbunden ist, die gegenüber einer bewegbaren Referenzelektrode (11) elektrisch isoliert angeordnet ist, und daß die zwischen Kondensatorelektrode (10) und Referenzelektrode (11) vorliegende elektrische Kapazität von der Meßeinrichtung registrierbar ist, wobei die elektrische Kapazität mittels einer Kapazitätsmeßbrücke (16) meßbar ist, und wobei zumindest eine der Elektroden (10, 11) eine sphärisch geformte Oberfläche aufweist.

2. Rasterkraftmikroskop nach Ansprüche 1,
**dadurch gekennzeichnet,**
daß beide Elektroden sphärisch geformte Oberflächen aufweisen.

3. Rasterkraftmikroskop nach Anspruch 1 oder 2,
**dadurch gekennzeichnet,**
daß die Tastspitze (4) an ihrem der Spitze entgegengesetzten Ende oder eine federnde Aufhängung der Tastspitze (4) die Kondensatorelektrode (10) bilden.

## Claims

1. A scanning force microscope with a resiliently mounted probe tip (4) which is held at a distance from an object surface (3) and is movable relative to the object surface, and the movement of which as a result of forces acting between the probe tip and the object surface can be recorded by means of a measuring device which detects the movement by means of electrical capacitance, wherein the probe tip (4) is attached fixed to a capacitor electrode (10) which is electrically insulated with respect to a movable reference electrode (11), and the electrical capacitance which exists between the capacitor electrode (10) and the reference electrode (11) can be recorded by the measuring device, wherein the electrical capacitance can be measured by means of a capacitance bridge (16), and wherein at least one of the electrodes (10, 11) has a spherically shaped surface.

2. A scanning force microscope according to claim 1, characterised in that both electrodes have spherically shaped surfaces.

3. A scanning force microscope according to claims 1 or 2, characterised in that the end of the probe tip (4) opposite the tip or a resilient suspension of the probe tip (4) forms the capacitor electrode (10).

## Revendications

1. Microscope à force atomique, avec une pointe de détection (4) montée élastiquement, qui est maintenue à distance de la surface d'un objet (3) et peut être déplacée par rapport à ladite surface, et dont le déplacement, dû à des forces agissant entre la pointe de détection et la surface de l'objet, peut être enregistré par un dispositif de mesure enregistrant le déplacement de manière électriquement capacitive, la pointe de détection (4) étant fixement reliée à une électrode de condensateur (10) qui est disposée de manière électriquement isolée par rapport à une électrode de référence mobile (11), et la capacité électrique présente entre l'électrode de condensateur (10) et l'électrode de référence (11) pouvant être enregistrée par le dispositif de mesure, la capacité électrique pouvant être mesurée au moyen d'un pont de mesure de capacité (16) et au moins une des électrodes (10, 11) présentant une surface de forme sphérique.

2. Microscope à force atomique selon la revendication 1, caractérisé en ce que les deux électrodes présentent des surfaces de forme sphérique.

3. Microscope à force atomique selon la revendication 1 ou 2, caractérisé en ce que la pointe de détection (4), à son extrémité opposée à la pointe, ou bien un moyen de montage élastique de la pointe de détection (4), constitue l'électrode de condensateur (10).
